# EUROPEAN PATENT SPECIFICATION

(11) **EP 4 154 149 B1**
(45) Date of publication and mention of the grant of the patent: **04.10.2023**
(21) Application number: 20736952.1
(22) Date of filing: 29.06.2020
(51) Int. Cl.: H04L 9/08, H04L 9/32, G06F 21/62, G06F 21/60, H04L 9/40, H04L 67/1097

(54) **DATA STORAGE SERVER AND CLIENT DEVICES FOR SECURELY STORING DATA**
DATENSPEICHERSERVER UND CLIENT-VORRICHTUNGEN ZUR SICHEREN SPEICHERUNG VON DATEN
SERVEUR DE STOCKAGE DE DONNÉES ET DISPOSITIFS CLIENTS POUR STOCKER DES DONNÉES DE MANIÈRE SÉCURISÉE

(43) Date of publication of application: 29.03.2023
(73) Proprietor: Huawei Technologies Co., Ltd., Shenzhen, Guangdong 518129 (CN)
(72) Inventor: SHEMER, Eli, 80992 Munich (DE); DINARI, Rafi, 80992 Munich (DE); AKIRAV, Shay, 80992 Munich (DE)
(74) Representative: Gill Jennings & Every LLP
(86) International application number: PCT/EP2020/068267
(87) International publication number: WO 2022/002351

(56) References cited:
- US-A1- 2019 013 936
- US-A1- 2019 042 767
- US-B1- 7 111 005

## Description

### TECHNICAL FIELD

The present disclosure relates to data storage systems. More specifically, the present disclosure relates to client devices and data storage servers for securely storing security sensitive data, including numerical data and/or textual data, and enabling range queries of the security sensitive data.

### BACKGROUND

Remote data storage, such as cloud data storage, is becoming more and more popular, because it allows user client devices, which can usually store only a limited amount of data, to save data and files in one or more remote data storage servers that can be accessed either through the public internet or a dedicated private network connection. A cloud storage provider hosts, secures, manages, and maintains the data storage servers and the associated infrastructure and ensures the access of the user client devices to the data. One of the main advantages of cloud storage is that the user data may be recovered from the remote data storage servers when the data has been removed, corrupted, or otherwise becomes inaccessible on the user client device. However, as the user data that is transferred to the remote data storage servers becomes the responsibility of the cloud storage provider, security sensitive user data may potentially become accessible to the cloud storage provider, which may be undesirable for the user and/or conflict with legal regulations. Often security sensitive data to be stored in a remote data storage server comprises security sensitive data, such as numerical or textual data, which can be queried in plaintext, but, if encrypted, cannot, as such, be easily queried using, for instance, range queries. Patent document US 2019/042767 A1 discloses relevant prior art.

### SUMMARY

It is an objective of the present disclosure to provide an improved client device and an improved data storage server for secure cloud storage of security sensitive data, such as numerical data and/or textual data, enabling range queries of the security sensitive data. The foregoing and other objectives are achieved by the subject matter of the independent claims. Further implementation forms are apparent from the dependent claims, the description and the figures.

According to a first aspect, a client device comprising a processor is provided. The processor is configured to obtain security sensitive data, for instance, from an application running on the client device or another communication device. The security sensitive data comprises a plurality of plaintext data elements, wherein each of the plurality of plaintext data elements falls within one of a plurality of subranges of a range, e.g. a value range, and each subrange of the plurality of subranges is identified by a subrange identifier. The plurality of plaintext data elements can be queried in plaintext and may comprise, for instance, numerical values and/or textual data, i.e. letter strings.

The processor of the client device is configured to encrypt the plurality of plaintext data elements with a first encryption key to obtain a plurality of cyphertext data elements. Moreover, the processor of the client device is configured to send the data, including the plurality of cyphertext data elements, to a data storage server for storing the data in a database of the data storage server, in particular in a first table of the database. The processor of the client device is further configured to encrypt, for each subrange of the plurality of subranges, a subrange data bucket with a second encryption key, wherein each subrange data bucket comprises the plaintext data elements falling within the respective subrange and the corresponding cyphertext data elements. Moreover, the processor of the client device is configured to send, for each subrange of the plurality of subranges, the respective encrypted subrange data bucket and a message digest of the respective subrange identifier or the respective encrypted subrange data bucket and a message authentication code, MAC, of the respective subrange identifier based on a MAC key to the data storage server for storing the plurality of encrypted subrange data buckets and the plurality of message digests or the plurality of MAC of the subrange identifiers in the database of the data storage server, in particular in a second table of the database. The client device may be one of a plurality of client devices configured to store security sensitive data on the remote data storage server.

In a further possible implementation form of the first aspect, the database is a relational database, wherein the data, including the plurality of cyphertext data elements, is stored in the first table of the relational database and the plurality of encrypted subrange data buckets and the plurality of message digests or MACs of the subrange identifiers are stored in the second table of the database.

In a further possible implementation form of the first aspect, the plurality of cyphertext data elements are stored in one or more columns of the first table of the relational database. In an implementation form the encrypted column(s) of the first table of the relational database may comprise column elements encrypted using different encryption keys. For instance, a first column element may be encrypted with the encryption key of a first client device, while a second column element may be encrypted with the encryption key of a second client device.

In a further possible implementation form of the first aspect, the processor of the client device is further configured to send an identifier of the first encryption key with the data, including the plurality of cyphertext data elements, to the data storage server for storing the data on the basis of the identifier of the first encryption key in the database of the data storage server, in particular in the first table of the database. In other words, based on the identifier of the first encryption key the remote data storage server is configured to determine the location in the database where to store the encrypted security sensitive data.

In a further possible implementation form of the first aspect, the processor of the client device is further configured to obtain an encrypted version of at least one of the first encryption key, the second encryption key, and the MAC key from a remote key management server, wherein the at least one of the encrypted first encryption key, the encrypted second encryption key, and the encrypted MAC key is encrypted with a client device master key. In a further implementation form, the processor of the client device may be configured to receive the client device master key from the remote key management server. In a further implementation form, the client device is configured to generate at least one of the first encryption key, the second encryption key, and the MAC key.

In a further possible implementation form of the first aspect, the processor of the client device is further configured to send at least one of the encrypted first encryption key, the encrypted second encryption key, and the encrypted MAC key to the data storage server. In an implementation form, the encrypted first encryption key can serve as the identifier of the first encryption key for storing the data, including the plurality of cyphertext data elements, on the basis of the first identifier, in the database of the data storage server, in particular in the first table of the database.

In a further possible implementation form of the first aspect, for processing a select query of the data, including the plurality of cyphertext data elements, stored in the database of the data storage server, the processor of the client device is configured to: determine the subrange identifiers of the subranges covered by a query value range, e.g. a query value range defined by the select query for obtaining a subset of the plurality of subrange identifiers; obtain, on the basis of the message digests or MAC of the one or more subrange identifiers of the subset of the plurality of subrange identifiers, one or more of the plurality of encrypted data buckets from the second table of the database of the data storage server; decrypt the one or more encrypted data buckets with the second encryption key to obtain for each encrypted data bucket one or more of the plurality of pairs of plaintext data elements and cyphertext data elements; and obtain, on the basis of the one or more cyphertext data elements, the data stored in the database of the data storage server, i.e. query the data stored in the database of the data storage server with the one or more cyphertext data elements for obtaining at least a portion of the data associated with the one or more cyphertext data elements.

In a further possible implementation form of the first aspect, the processor of the client device is further configured to check, on the basis of the plaintext data elements, whether the respective data element falls within the query range.

In a further possible implementation form of the first aspect, the processor of the client device is further configured to encrypt the plaintext data elements with the first encryption key using a random encryption scheme or a deterministic encryption scheme.

In a further possible implementation form of the first aspect, the first encryption key and the second encryption key are a same symmetric encryption key, i.e. identical encryption keys.

In a further possible implementation form of the first aspect, the MAC is a hash-based message authentication code, HMAC.

According to a second aspect, a method for operating a client device is provided. The method comprises the steps of: obtaining data comprising a plurality of plaintext data elements, wherein each of the plurality of plaintext data elements falls within one of a plurality of subranges of a range, e.g. a value range and each subrange of the plurality of subranges is identified by a subrange identifier; encrypting the plurality of plaintext data elements with a first encryption key to obtain a plurality of cyphertext data elements; sending the data, including the plurality of cyphertext data elements, to a data storage server for storing the data in a database of the data storage server, in particular in a first table of the database of the data storage server; encrypting, for each subrange of the plurality of subranges, a subrange data bucket with a second encryption key, wherein each subrange data bucket comprises the plaintext data elements falling within the respective subrange and the corresponding cyphertext data elements; and sending, for each subrange of the plurality of subranges, the respective encrypted subrange data bucket and a message digest of the respective subrange identifier or the respective encrypted subrange data bucket and a message authentication code, MAC, of the respective subrange identifier based on a MAC key to the data storage server for storing the plurality of encrypted subrange data buckets and the plurality of message digests or MAC of the subrange identifiers in the database, in particular in a second table of the database of the data storage server.

The method according to the second aspect of the present disclosure can be performed by the client device according to the first aspect of the present disclosure. Thus, further features of the method according to the second aspect of the present disclosure result directly from the functionality of the client device according to the first aspect of the present disclosure as well as its different implementation forms described above and below.

According to a third aspect, a data storage server comprising a processor is provided. The processor of the data storage server is configured to receive data from a client device. The data comprises a plurality of cyphertext data elements encrypted with a first encryption key based on a plurality of plaintext data elements, wherein each of the plurality of plaintext data elements falls within one of a plurality of subranges of a range, e.g. a value range and each subrange of the plurality of subranges is identified by a subrange identifier. Moreover, the processor of the data storage server is configured to receive, for each subrange of the plurality of subranges, an encrypted subrange data bucket encrypted with a second encryption key and a message digest of the respective subrange identifier or the encrypted subrange data bucket encrypted with the second encryption key and a message authentication code, MAC, of the respective subrange identifier based on a MAC key. The processor of the data storage server is further configured to store the plurality of encrypted subrange data buckets and the plurality of message digests or MAC of the subrange identifiers in a database of the data storage server. Each encrypted subrange data bucket comprises the plaintext data elements falling within the respective subrange and the corresponding cyphertext data elements.

In a further possible implementation form of the third aspect, the database is a relational database, wherein the processor of the data storage server is further configured to store the data, including the plurality of cyphertext data elements, in a first table of the database and the plurality of encrypted subrange data buckets and the plurality of message digests or MACs of the subrange identifiers in a second table of the database.

In a further possible implementation form of the third aspect, the processor of the data storage server is further configured to store the plurality of cyphertext data elements in one or more columns of the first table of the database. In an implementation form, the encrypted column(s) of the first table of the relational database may comprise column elements encrypted using different encryption keys. For instance, a first column element may be encrypted with the encryption key of a first client device, while a second column element may be encrypted with the encryption key of a second client device.

In a further possible implementation form of the third aspect, the processor of the data storage server is further configured to receive an identifier of the first encryption key with the data, including the plurality of cyphertext data elements, from the client device and store the data on the basis of the identifier of the first encryption key in the database of the data storage server, in particular in the first table of the database. In other words, based on the identifier of the first encryption key the processor of the data storage server may be configured to determine where in the database to store the encrypted security sensitive data.

In a further possible implementation form of the third aspect, the processor of the data storage server is further configured to receive at least one of the encrypted first encryption key, the encrypted second encryption key, and the encrypted MAC key from the client device. In an implementation form the encrypted first encryption key can serve as the identifier of the first encryption key for storing the data, including the plurality of cyphertext data elements, on the basis of the first identifier in the database of the data storage server, in particular in the first table of the database.

In a further possible implementation form of the third aspect, for processing a select query of the data, including the plurality of cyphertext data elements, stored in the database, in particular the first table of the database, the processor of the data storage server is further configured to select one or more of the plurality of encrypted data buckets stored in the database (in particular in the second table of the database) on the basis of one or more message digests or MAC of one or more subrange identifiers received from the client device. The processor of the data storage server is further configured to send the selected one or more of the plurality of encrypted data buckets to the client device. Moreover, the processor of the data storage server is configured to query the data stored in the database, in particular in the first table of the database on the basis of one or more ciphertext data elements received from the client device.

In a further possible implementation form of the third aspect, the first encryption key and the second encryption key are a same symmetric encryption key, i.e. identical encryption keys.

In a further possible implementation form of the third aspect, the MAC is a hash-based message authentication code, HMAC.

According to a fourth aspect, a method for operating a data storage server is provided. The method comprises the steps of: receiving data from a client device, the data comprising a plurality of cyphertext data elements encrypted with a first encryption key based on a plurality of plaintext data elements, wherein each of the plurality of plaintext data elements falls within one of a plurality of subranges of a range, e.g. a value range and each subrange of the plurality of subranges is identified by a subrange identifier; receiving, for each subrange of the plurality of subranges, an encrypted subrange data bucket encrypted with a second encryption key and a message digest of the respective subrange identifier or the encrypted subrange data bucket encrypted with the second encryption key and a message authentication code, MAC, of the respective subrange identifier based on a MAC key; and storing the plurality of encrypted subrange data buckets and the plurality of message digests or MAC of the subrange identifiers in a database of the data storage server, wherein each encrypted subrange data bucket comprises the plaintext data elements falling within the respective subrange and the corresponding cyphertext data elements.

The method according to the fourth aspect of the present disclosure can be performed by the data storage server according to the third aspect of the present disclosure. Thus, further features of the method according to the fourth aspect of the present disclosure result directly from the functionality of the data storage server according to the third aspect of the present disclosure as well as its different implementation forms described above and below.

According to a fifth aspect, a computer program product comprising a non-transitory computer-readable storage medium for storing program code which causes a computer or a processor to perform the method according to the second aspect or the method according to the fourth aspect, when the program code is executed by the computer or the processor, is provided.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 is a schematic diagram illustrating a data storage system according to an embodiment, including a plurality of client devices according an embodiment and a data storage server operating a database according to an embodiment;
Figs. 2a, 2b and 2c illustrate tables used by a client device according to an embodiment and a data storage server according to an embodiment for storing security sensitive data;
Fig. 3 is a sequence diagram illustrating interactions between a client device according to an embodiment, a data storage server according to an embodiment, and a key management server for generating a column of encrypted data in a database of the data storage server;
Fig. 4 is a sequence diagram illustrating interactions between a client device according to an embodiment, a data storage server according to an embodiment, and a key management server for retrieving data from a database of the data storage server;
Fig. 5 is a sequence diagram illustrating interactions between a client device according to an embodiment, a data storage server according to an embodiment, and a key management server for adding data to a database of the data storage server;
Fig. 6 is a sequence diagram illustrating interactions between a client device according to an embodiment, a data storage server according to an embodiment, and a key management server for updating data in a database of the data storage server;
Fig. 7 is a flow diagram illustrating a method for storing data of a client device in a database of a remote data storage server according to an embodiment; and
Fig. 8 is a flow diagram illustrating a method of operating a data storage server with a database according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

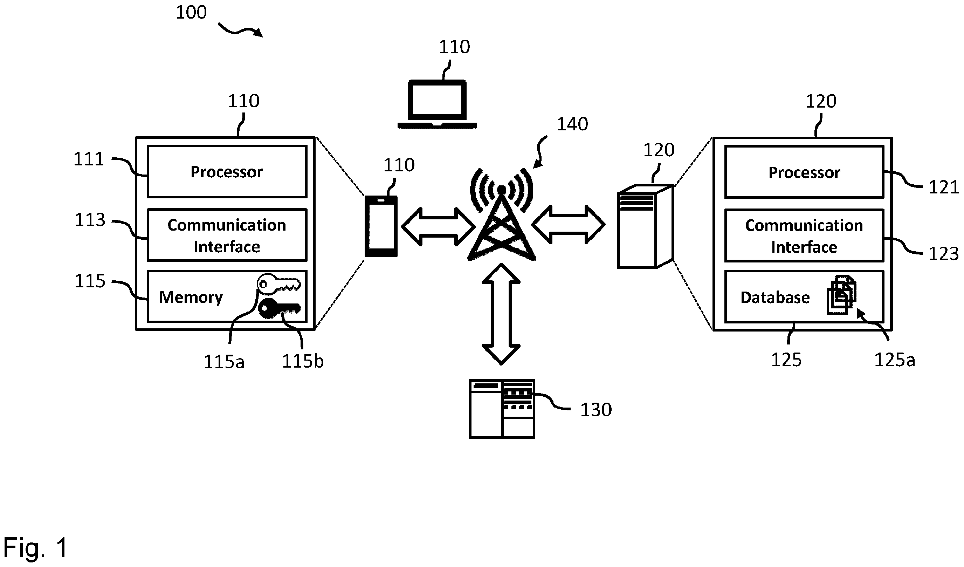

Figure 1 is a schematic diagram illustrating a data storage system 100 according to an embodiment. As will be described in more detail below, the data storage system 100 comprises a plurality of client or user devices 110, such as smart phones, smart watches, tablet computers, laptop computers, desktop computers or other types of loT devices, one or more remote data storage servers 120 operating a database 125 and a key management server 130. In the following detailed embodiments of the client device 110 and the data storage server 120 will be described, where the database 125 is implemented as a relational database 125, for instance, a SQL based relational database 125. In these embodiments, as will be described in more detail below the data storage server 120 is configured to store security sensitive data in one or more encrypted columns of one or more tables of the relational database 125. As used herein, an encrypted column of a table of the relational database 125 is a column having column elements being encrypted with one or more encryption keys. In an embodiment, the encrypted column(s) of a table of the relational database 125 may comprise column elements encrypted using different encryption keys. For instance, a first column element may be encrypted with the encryption key of a first client device 110, while a second column element may be encrypted with the encryption key of a second client device 110.

It will be appreciated, however, that the data storage server 120 may comprise a nonrelational database 125 and the client device 110 may be configured to operate therewith, wherein the security sensitive data is stored in an encrypted data structure other than an encrypted column of a table. For instance, in an embodiment, the database 125 may be implemented as a MongoDB database 125. For such an embodiment, the data storage server 120 may be configured to store the security sensitive data in one or more encrypted fields of the MongoDB database 125.

As illustrated in figure 1, the plurality of client devices 110, the one or more remote data storage servers 120 and the key management server 130 may be configured to communicate with each other via a wireless, e.g. cellular and/or wired communication network 140. In an embodiment, the one or more remote data storage server 120 may be one or more cloud storage servers 120 configured to communicate with the client devices 110 via the Internet.

As illustrated in figure 1, the client device 110 may comprise a processor 111 for processing and generating data, a communication interface 113, including, for instance, an antenna, for exchanging data with the other components of the data storage system 100, and a non-transitory memory 115 for storing data. The processor 111 of the client device 110 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The non-transitory memory 115 may store data, such as electronic keys and executable program code which, when executed by the processor 111, causes the client device 110 to perform the functions, operations and methods described herein. The communication interface 113 may comprise a wired or wireless communication interface 113. Likewise, the data storage server 120 may comprise a processor 121 for processing and generating data, a communication interface 123 for exchanging data with the other components of the data storage system 100 as well as the database 125 for storing data.

The client device 110 is configured to store data 125a in the database 125 of the remote data storage server 120. The data 125a comprises a plurality of security sensitive plaintext data elements. The plurality of plaintext data elements can be queried in plaintext and may comprise, for instance, numerical values, such as integer values, real values, floating point values and the like, and/or textual data, such as letter strings. Although in the following detailed embodiments will be described in the context of plaintext data elements in the form of plaintext numerical values, it will be appreciated that these embodiments also apply to other types of plaintext data elements that can be queried as well, such as textual data.

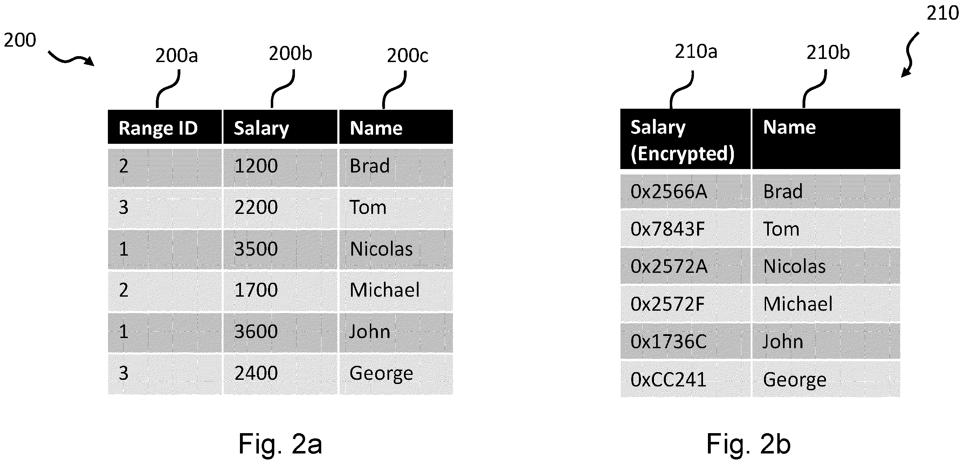

By way of example, the plurality of security sensitive plaintext data elements may comprise the salary values 200b illustrated in the table 200 shown in figure 2a (each of the salary values associated with the name 200c of the person earning that salary). Each of the plurality of plaintext data elements, e.g. numerical values 200b, falls within one of a plurality of subranges of a range, e.g. a value range, wherein each subrange is identified by a subrange identifier 200a, such as the subrange identifiers 200a shown in the table 200.

The client device 110 is configured to encrypt the plurality of plaintext numerical values 200b with a first symmetric encryption key 115a for obtaining a plurality of cyphertext numerical values 210a (illustrated in table 210 shown in figure 2b). Moreover, the client device 110 is configured to send the data 125a, including the plurality of cyphertext numerical values 210a as well as the cleartext names 200c of the persons earning the respective salary, to the data storage server 120 for storing the data 125a in a first table 210 of the database 125 of the data storage server 120, such as the exemplary first table 210 shown in figure 2b.

Moreover, the client device 110 is configured to encrypt, for each subrange, a subrange data bucket with a second encryption key 115a. In an embodiment, the first encryption key 115a and the second encryption key 115a may be the same symmetric encryption key 115a. In another embodiment, the first encryption key and the second encryption key may be different symmetric encryption keys. Each subrange data bucket comprises the plaintext numerical values 200b falling within the respective subrange and the corresponding cyphertext numerical values 210a. In an embodiment, the client device 110 is configured to order the pairs within a respective data bucket on the basis of the plaintext numerical values 200b.

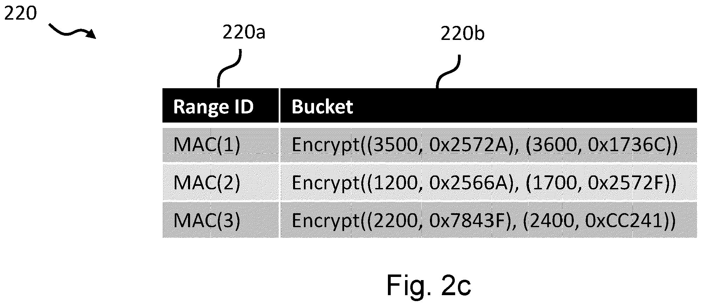

The client device 110 is further configured to send, for each subrange, the respective encrypted subrange data bucket 220b (illustrated in the table 220 shown in figure 2c) and a message digest, such as a hash value, of the respective subrange identifier or, alternatively, the respective encrypted subrange data bucket 220b and a message authentication code, MAC, 220a of the respective subrange identifier based on a MAC key 115b to the data storage server 120 for storing the plurality of encrypted subrange data buckets 220b and the plurality of message digests or MACs 220a of the subrange identifiers in a second table 220 of the database 125 of the data storage server 120, for instance, in the exemplary table 220 shown in figure 2c.

Complementary to the client device 110, the data storage server 120 is configured to store data 125a in the relational database 125 of the data storage server 120. The data storage server 120 is configured to receive the data 125a, including the plurality of cyphertext numerical values 210a as well as the plaintext data 200c associated therewith, from the client device 110 for storing the data 125a in the first table 210 of the database 125, wherein the plurality of cyphertext numerical values 210a are encrypted with the first encryption key 115a. Moreover, the data storage server 120 is configured to receive, for each subrange of the plurality of subranges, a respective subrange data bucket 220b encrypted with the second encryption key 115a and a respective message digest, such as a hash value, of the respective subrange identifier or a respective message authentication code, MAC, 220a of the respective subrange identifier based on the MAC key 115b for storing the plurality of encrypted subrange data buckets 220b and the plurality of message digests or the plurality of MACs 220a of the subrange identifiers in the second table 220 of the database 125. As already described above, each subrange data bucket 220b comprises the plaintext numerical values 200b falling within the respective subrange and the corresponding cyphertext numerical values 210a.

In an embodiment, the client device is further configured to obtain an encrypted version of the first encryption key 115a, an encrypted version of the second encryption key 115a and/or an encrypted version of the MAC key 115b from the data storage server 120. The encrypted first encryption key 115a, the encrypted second encryption key 115a and/or the encrypted MAC key 115b may be encrypted with a client device master key. In an embodiment, the client device 110 is configured to receive the client device master key from the remote key management server 130. In an embodiment, the client device 110 is configured to encrypt the plaintext numerical values 200b with the first encryption key 115a using a random encryption scheme or a deterministic encryption scheme. In an embodiment, the MAC is an HMAC.

In an embodiment, the client device 110 is further configured to send an identifier of the first encryption key along 115a along with the data 125a, including the plurality of cyphertext numerical values 210a, to the data storage server 120. In turn, the data storage server 120 is configured to store the data 125a on the basis of the first identifier in the database 125. Thus, based on the identifier of the first encryption key 115a the data storage server 120 may be configured to determine where in the database 125 to store the data 125a, including the plurality of cyphertext numerical values 210a.

In an embodiment, the client device 110 is further configured to send the encrypted first encryption key 115a, the encrypted second encryption key 115a, and/or the encrypted MAC key 115b to the data storage server 120. In an embodiment, the encrypted first encryption key 115a can serve as the identifier of the first encryption key 115a for storing the data 125a, including the plurality of cyphertext numerical values 210, on the basis of the identifier in the database 125 of the data storage server 120, in particular in the first table 210 of the database 125.

In an embodiment, database configuration information for identifying the rows and/or columns of the relational database 125 encrypted with a respective encryption key may be stored in the memory 115 of the client device 110. In an embodiment, the database configuration information may comprise one or more metadata tables. In an embodiment, such a metadata table could represent every encrypted row and/or column of the relational database 125 using a first value, such as "1", while representing every non-encrypted row and/or column of the relational database 125 with a second value different from the first value, such as "0". Alternatively or additionally, the database configuration information may comprise a list of the encrypted rows and/or columns of the relational database and their respective encryption keys. For instance, a first column element of a table of the relational database 125 may be encrypted with the encryption key of a first client device 110, while a second column element may be encrypted with the encryption key of a second client device 110. For the case of an encrypted column the data storage server 120 may be configured to determine based on the identifier of the encryption key the row of the encrypted column 127b to store the encrypted security sensitive data.

On the basis of the database configuration information, the client device 110 is configured to identify the encrypted rows and/or columns of the first table 210 of the relational database 125 and, thus, to determine whether the data to be stored in the relational database 125 comprises security sensitive data to be stored in one of the encrypted rows and/or columns 127b of the first table 210 of the relational database 125 identified by means of the database configuration information.

In an embodiment, the client device 101 may be configured to periodically poll the database configuration information from the remote data storage server 120. In case of changes of the relational database 125, such as new or changed encrypted rows and/or columns of the relational database 125, the data storage server 120 may be configured to provide an update of the database configuration information to the client device 110.

In an embodiment, for processing a select query of the data 125a, including the plurality of cyphertext numerical values 210a, stored in the first table 210 of the database 125 of the data storage server 120, the client device 110 is configured to determine the subrange identifiers of the subranges covered by a query value range defined by the select query for obtaining a subset of the plurality of subrange identifiers 200a. For instance, for the example shown in figure 2a, for an exemplary select query for all salaries within the query value range 1500 to 2500 the client device 110 may determine the subrange identifiers "2" and "3". Based on the MACs of at least one subrange identifier of the identified subrange identifiers, i.e. the subset of the plurality of subrange identifiers 200a, the client device 110 is further configured to obtain one or more of the plurality of encrypted data buckets 220b from the second table 220 of the database 125 of the data storage server 120. For instance, for the exemplary select query for all salaries within the query value range 1500 to 2500 the client device 110 may obtain the data buckets associated with MAC(2) and MAC(3) from the second table 220. The encrypted data buckets obtained from the database 125 are decrypted by the client device 110 with the second encryption key 115a for obtaining for each encrypted data bucket one or more of the plurality of pairs of plaintext numerical values and cyphertext numerical values. Based on the one or more cyphertext numerical values the client device 100 is further configured to obtain the data 125a stored in the first table 210 of the database 125 of the data storage server 120, i.e. query the data 125a stored in the first table 210 of the database 125 of the data storage server 120 with the one or more cyphertext numerical values for obtaining a portion of the data 125a associated with the one or more cyphertext numerical values.

In an embodiment, the client device 110 is further configured to check on the basis of the plaintext numerical values 200b whether the respective numerical value falls within the query value range.

Complementary to this embodiment of the client device 110, according to an embodiment, the data storage server 120 for processing a select query of the data, including the plurality of cyphertext numerical values 210a, stored in the first table 210 of the database 125 is configured to send one or more of the plurality of encrypted data buckets 220b stored in the second table 220 of the database 125 to the client device 110. The data storage server 120 is configured to select one or more of the plurality of encrypted data buckets 220b on the basis of the one or more MACs 220a of one or more subrange identifiers received from the client device 110. Moreover, the data storage server 120 may be configured to query the data stored in the first table 210 of the database 125 on the basis of one or more ciphertext numerical values received from the client device 110.

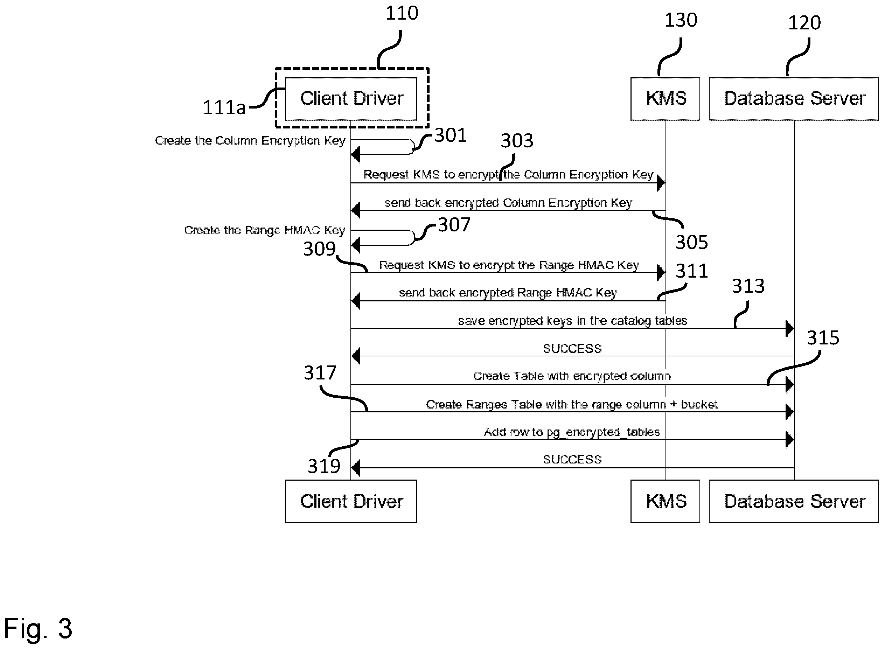

Figure 3 is a sequence diagram illustrating the interactions according to an embodiment between the client device 110, the remote data storage server (referred to as database server) 120, and the remote key management server (KMS) 130 in the process of creating an encrypted column, i.e. a column of encrypted numerical values 210a in the first table 210 of the relational database 125 of the remote data storage server 120 including the following steps.

Step 301: A client driver 111a of the client device 110 (which may be a software executed by the processor 111 of the client device 110) generates the first encryption key 115a. The encryption key 115a may be, for instance, a nonce generated by the client driver 111a.

Step 303: The client driver 111a of the client device 110 requests the KMS 130 to encrypt the encryption key 115a. In an embodiment, the KMS 130 may encrypt the encryption key 115a using a client master key associated with the client device 110. In an embodiment, the KMS 130 may generate the client master key on the fly in response to the request of the client device 110 to encrypt the encryption key 115a or it may already be available on the KMS 130 (for instance, because of an earlier request).

Step 305: The KMS 130 returns the encrypted encryption key 115 back to the client device 110.

Step 307: The client driver 111a of the client device 110 generates the range HMAC key 115b. The range HMAC key 115b may be, for instance, a nonce generated by the client driver 111a. As will be appreciated, step 307 and the following steps 309 and 311 may be performed before or substantially simultaneously with steps 301, 303 and 305 described above.

Step 309: The client driver 111a of the client device 110 requests the KMS 130 to encrypt the range HMAC key 115b. In an embodiment, the KMS 130 may encrypt the range HMAC key 115b using the client master key associated with the client device 110.

Step 311: The KMS 130 returns the encrypted range HMAC key 115b back to the client device 110.

Step 313: The client driver 111a of the client device 110 sends the encrypted encryption key 115a and the encrypted range HMAC key 115b to the remote data storage server 120. In an embodiment, the client driver 111a may send the encrypted encryption key 115a and the encrypted range HMAC key 115b as part of database configuration information to the remote data storage server 120.

Step 315: In response to an acknowledgement message from the remote data storage server that the encrypted encryption key 115a and the encrypted range HMAC key 115b have been received, the client driver 111a of the client device 110 instructs the remote data storage server 120 to create the table 210 with the encrypted column of security sensitive numerical values 210a.

Step 317: The client driver 111a of the client device 110 instructs the remote data storage server 120 to create the second table 220, i.e. the ranges table 220 with the range column 220a and the encrypted data buckets 220b. As will be appreciated, step 317 may be performed before or substantially simultaneously with step 315 described above.

Step 319: The client driver 111a of the client device 110 instructs the remote data storage server 120 to add a row to the metadata table for updating the database configuration information.

The remote data storage server 120 reports the successful operation to the client device 110.

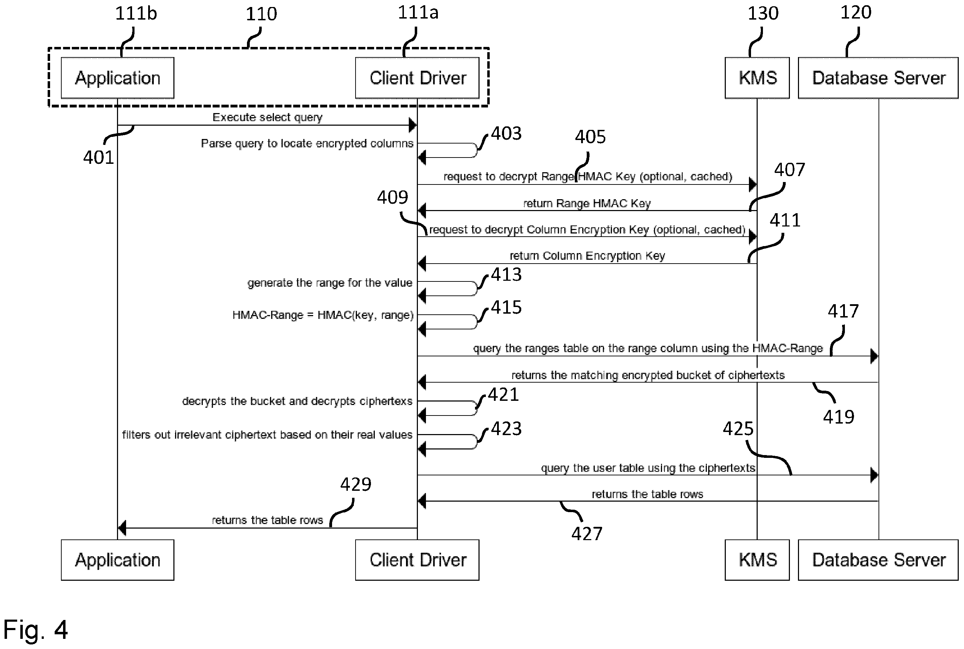

Figure 4 illustrates an embodiment of the interactions between the client device 110, the remote data storage server (referred to as database server) 120, and the remote key management server (KMS) 130 in the process of extracting, i.e. retrieving encrypted security sensitive numerical values 210a (as well as the data 210b associated therewith) from the remote data storage server 120. By way of example, in the embodiment shown in figure 4, the extraction of the data is illustrated in the context of a select query.

Step 401: An application 111b running on the client device 110 informs the client driver 111a to execute a select query for extracting numerical values 210a as well as the data 210b associated therewith from the relational database 125 of the remote data storage server 120.

Step 403: In response to step 401, the client driver 111a parses the select query from the application 111b for the column names associated with the numerical values to be extracted from the relational database 125 of the remote data storage server 120. The client driver 111a identifies the column names of the table 210 stored in the memory 115 of the client device 110 on the basis of the parsed select query.

Step 405: The client driver 111a of the client device 110 requests the KMS 130 to decrypt the respective range HMAC key 115b for each of the columns identified in step 403 of the relational database 125 storing encrypted security sensitive numerical values 210a. This step and the following step 407 may be omitted, if the respective range HMAC key(s) 115b is cached in the memory 115 of the client device 110.

Step 407: The KMS 130 returns the requested decrypted range HMAC key(s) 115c to the client device 110.

Step 409: The client driver 111a of the client device 110 requests the KMS 130 to decrypt the respective encryption key 115a for each of the columns identified in step 403 of the relational database 125 storing encrypted security sensitive numerical values 210a. This step and the following step 411 may be omitted, if the respective encryption key(s) 115a is cached in the memory 115 of the client device 110.

Step 411: The KMS 130 returns the requested decrypted encryption key(s) 115a to the client device 110. As will be appreciated, steps 409 and 411 may be performed before or substantially simultaneously with steps 405 and 407 described above.

Step 413: The client driver 111a of the client device 110 generates the range for the value.

Step 415: The client driver 111a of the client device 110 determines the HMAC range.

Step 417: On the basis of the HMAC range determined in step 415, the client driver 111a of the client device 110 queries the ranges 220a of the second table, i.e. the ranges table 220 stored in the relational database 125 of the data storage server 120.

Step 419: In response to the query of step 417, the data storage server 120 returns the matching encrypted data buckets 220b to the client driver 111a of the client device 110.

Step 421: The client driver 111a of the client device 110 decrypts the encrypted data buckets 220b received from the data storage server 120 as well as the cyphertexts contained therein.

Step 423: The client driver 111a of the client device 110 filters out irrelevant cyphertext based on their real values.

Step 425: The client driver 111a of the client device 110 sends a query to the data storage server 120 for querying the relational database 125 using the cyphertext numerical values 210a obtained in step 423.

Step 427: In response to the query of step 425, the data storage server 120 returns the queried table rows.

Step 429: The client driver 111a of the client device 110 forwards the table rows provided by the data storage server 120 to the application 111b of the client device 110.

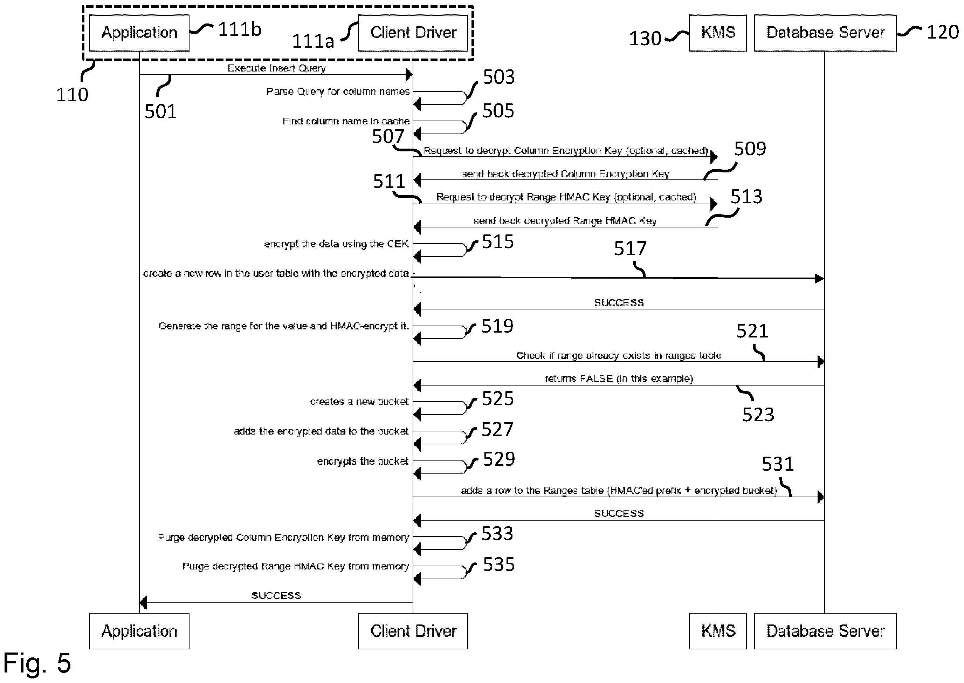

Figure 5 illustrates an embodiment of the interactions between the client device 110, the remote data storage server (referred to as database server) 120, and the remote key management server (KMS) 130 in the process of inserting, i.e. adding security sensitive numerical values for a new numerical range, i.e. a numerical range not defined yet.

Step 501: The application 111b running on the client device 110 informs the client driver 111a to execute a query to insert further numerical values in the relational database 125 of the remote data storage server 120.

Step 503: In response to step 501, the client driver 111a parses the query from the application 111b for the column names associated with the data to be stored in the relational database 125 of the remote data storage server 120.

Step 505: The client driver 111a identifies the column names stored in the memory 115 of the client device 110 on the basis of the parsed query.

Step 507: The client driver 111a of the client device 110 requests the KMS 130 to decrypt the respective encryption key 115a for each of the columns identified in step 505 of the relational database 125 storing encrypted security sensitive numerical values. This step and the following step 509 may be omitted, if the respective encryption key(s) 115a is cached in the memory 115 of the client device 110.

Step 509: The KMS 130 returns the requested decrypted encryption key(s) 115a to the client device 110.

Step 511: The client driver 111a of the client device 110 requests the KMS 130 to decrypt the respective range HMAC key 115b for each of the columns identified in step 505 of the relational database 125 storing encrypted security sensitive numerical values. This step and the following step 513 may be omitted, if the respective range HMAC key(s) 115b is cached in the memory 115 of the client device 110.

Step 513: The KMS 130 returns the requested decrypted range HMAC key(s) 115b to the client device 110. As will be appreciated, steps 511 and 513 may be performed before or substantially simultaneously with steps 509 and 511 described above.

Step 515: The client driver 111a of the client device 110 encrypts the security sensitive numerical values of the further data to be inserted into the relational database 125 using the encryption key(s) 115a.

Step 517: The client driver 111a of the client device 110 instructs the remote data storage server 120 to create a new row in the first table 210 stored in the relational database 125 with the encrypted security sensitive numerical values.

Step 519: The client driver 111a of the client device 110 generates the range for the values and determines the HMAC thereof by using the HMAC function with the range HMAC key 115b.

Step 521: The client driver 111a of the client device 110 checks with the data storage server 120 whether the new HMAC value corresponding to the new range already exists in the second table, i.e. the ranges table 220 of the relational database 125.

Step 523: The data storage server 120 informs the client driver 111a of the client device 110 that the new HMAC value corresponding to the new range does not yet exist in the ranges table 220 of the relational database 125.

Steps 525, 527 and 529: The client driver 111a of the client device 110 creates a new data bucket, adds the encrypted numerical values to the new data bucket and encrypts the new data bucket.

Step 531: The client driver 111a of the client device 110 instructs the data storage server 120 to add a new row to the ranges table 220 stored in the relational database 125. In an embodiment, the data storage server 120 is configured to add the HMAC, i.e. the HMAC value 220a and the encrypted data bucket 220b to the new row of the ranges table 220.

Step 533: In response to the acknowledgment by the data storage server 120 that the new row has been added to the ranges table 220 stored in the relational database 125, the client driver 111a of the client device 110 removes the column encryption key 115a from the memory 115.

Step 535: The client driver 111a of the client device 110 removes the range HMAC key 115b from the memory 115. As will be appreciated, step 535 may be performed before or substantially simultaneously with step 533 described above.

In response to the acknowledgment by the data storage server 120 that the new row has been added to the ranges table 220 stored in the relational database 125, the client driver 111a may report this to the application 111b of the client device 110 that issued the original insert query request.

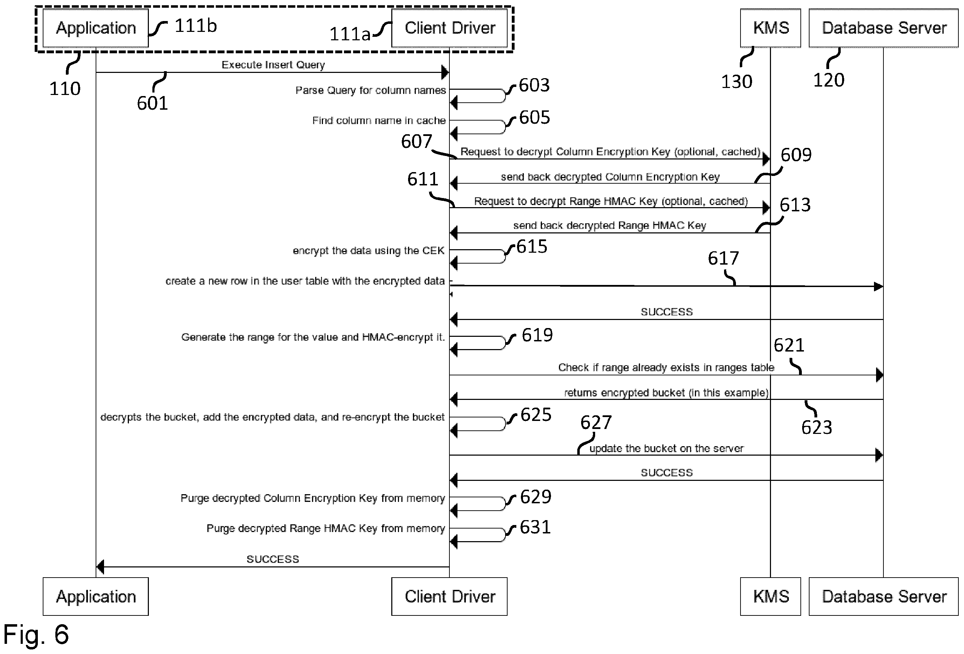

Figure 6 illustrates an embodiment of the interactions between the client device 110, the remote data storage server (referred to as database server) 120, and the remote key management server (KMS) 130 in the process of updating security sensitive numerical values in the first table 210 from a numerical range already in use.

Step 601: The application 111b running on the client device 110 informs the client driver 111a to execute a query to insert further numerical values in the relational database 125 of the remote data storage server 120, wherein the further numerical values fall within a numerical range already in use.

Step 603: In response to step 601, the client driver 111a parses the query from the application 111b for the column names associated with the data to be stored in the relational database 125 of the remote data storage server 120.

Step 605: The client driver 111a identifies the column names of the first table 210 stored in the memory 115 of the client device 110 on the basis of the parsed query.

Step 607: The client driver 111a of the client device 110 requests the KMS 130 to decrypt the respective encryption key 115a for each of the columns identified in step 605 of the relational database 125 storing encrypted security sensitive numerical values. This step and the following step 609 may be omitted, if the respective encryption key(s) 115a is cached in the memory 115 of the client device 110.

Step 609: The KMS 130 returns the requested decrypted column encryption key(s) 115a to the client device 110.

Step 611: The client driver 111a of the client device 110 requests the KMS 130 to decrypt the respective range HMAC key 115b for each of the columns identified in step 605 of the relational database 125 storing encrypted security sensitive numerical values 210a. This step and the following step 613 may be omitted, if the respective range HMAC key(s) 115b is cached in the memory 115 of the client device 110.

Step 613: The KMS 130 returns the requested decrypted range HMAC key(s) 115b to the client device 110. As will be appreciated, steps 611 and 613 may be performed before or substantially simultaneously with steps 609 and 611 described above.

Step 615: The client driver 111a of the client device 110 encrypts the security sensitive numerical values of the further data to be inserted into the relational database 125 using the encryption key(s) 115a.

Step 617: The client driver 111a of the client device 110 instructs the remote data storage server 120 to create a new row in the first table 210 stored in the relational database 125 with the encrypted security sensitive numerical values.

Step 619: The client driver 111a of the client device 110 generates the range for the numerical values and determines the keyed hash value, i.e. the HMAC value thereof by using the HMAC function with the range HMAC key 115b.

Step 621: The client driver 111a of the client device 110 checks with the data storage server 120 whether the HMAC value corresponding to the range already exists in the second table 220, i.e. ranges table 220 of the relational database 125.

Step 623: The data storage server 120 informs the client driver 111a of the client device 110 that the HMAC value corresponding to the range does already exist in the ranges table of the relational database 125 by returning the corresponding encrypted data bucket 220b to the client driver 111a of the client device 110.

Step 625: The client driver 111a of the client device 110 decrypts the data bucket 220b, adds the encrypted numerical value to the decrypted data bucket and encrypts the modified data bucket.

Step 627: The client driver 111a of the client device 110 sends the encrypted modified data bucket 220b to the data storage server 120 so that the data storage server 120 can store the encrypted modified data bucket 220b together with the data buckets for the other numerical ranges in the second table 220 of the relational database 125. The successful storage of the encrypted modified data bucket in the relational database 125 is reported back to the client driver 111a.

Step 629: In response to the acknowledgment by the data storage server 120 that the modified data bucket has been stored in the relational database 125, the client driver 111a of the client device 110 removes the column encryption key 115a from the memory 115.

Step 631: The client driver 111a of the client device 110 removes the range HMAC key 115b from the memory 115. As will be appreciated, step 631 may be performed before or substantially simultaneously with step 629 described above.

In response to the acknowledgment by the data storage server 120 that the modified data bucket has been stored in the relational database 125, the client driver 111a may report this to the application 111b of the client device 110 that issued the original insert query request.

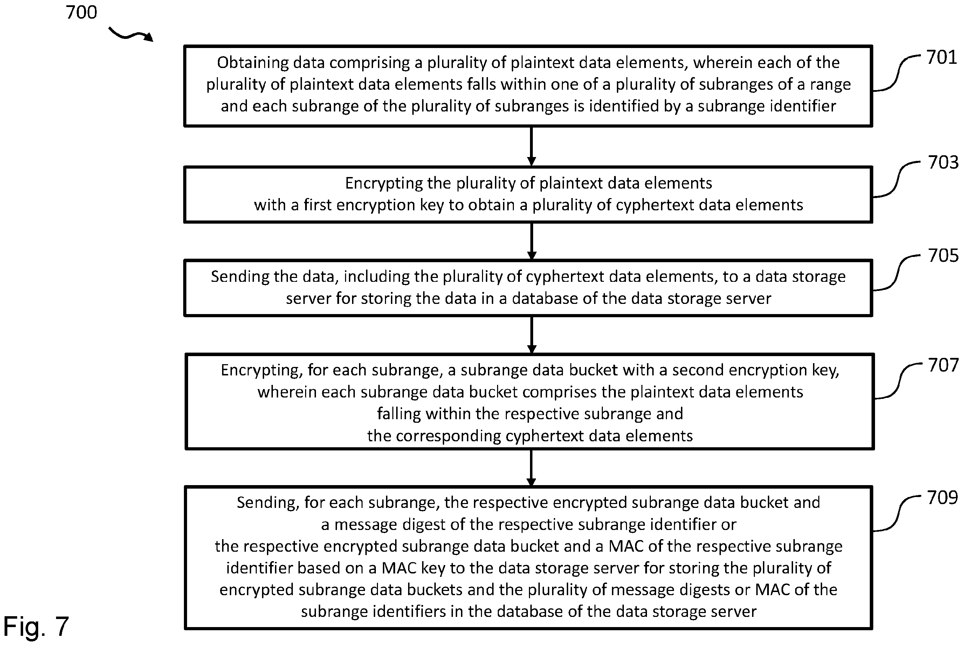

Figure 7 is a flow diagram of a method 700 for operating the client device 110 according to an embodiment. The method 700 comprises the following steps:

Step 701: obtaining data 125a comprising a plurality of plaintext data elements, e.g. numerical values 200b, wherein each of the plurality of plaintext data elements 200b falls within one of a plurality of subranges of a range, e.g. value range and each subrange of the plurality of subranges is identified by a subrange identifier 200a.

Step 703: encrypting the plurality of plaintext data elements 200b with the first encryption key 115a to obtain the plurality of cyphertext data elements 210a.

Step 705: sending the data 125a, including the plurality of cyphertext data elements 210a, to the data storage server 120 for storing the data 125a in the database 125 of the data storage server 120.

Step 707: encrypting, for each subrange of the plurality of subranges, a subrange data bucket 220b with the second encryption key 115a, wherein each subrange data bucket 220b comprises the plaintext data elements falling within the respective subrange and the corresponding cyphertext data elements.

Step 709: sending, for each subrange of the plurality of subranges, the respective encrypted subrange data bucket 220b and a message authentication code, MAC, 220a of the respective subrange identifier 200a based on a MAC key 115b (or a message digest, such as a hash value, of the respective subrange identifier) to the data storage server 120 for storing the plurality of encrypted subrange data buckets 220b and the plurality of MACs 220a (or message digests) of the subrange identifiers 200a in the database 125 of the data storage server 120.

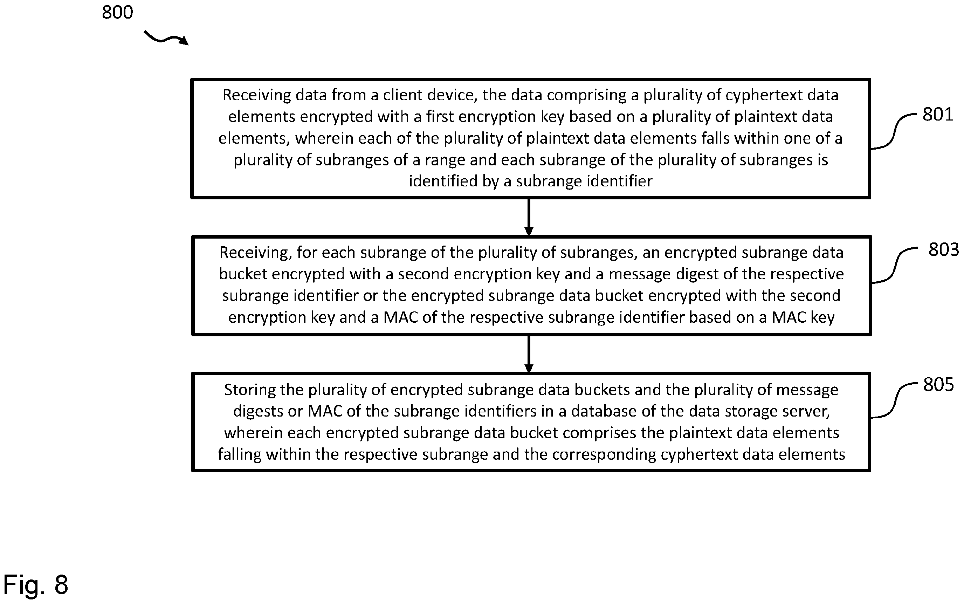

Figure 8 is a flow diagram illustrating a method 800 for operating the data storage server 120 according to an embodiment. The method 800 comprises the following steps.

Step 801: receiving data 125a from a client device 110, the data 125a comprising a plurality of cyphertext data elements, e.g. cyphertext numerical values 210a encrypted with the first encryption key 115a based on a plurality of plaintext data elements, e.g. numerical values 200b, wherein each of the plurality of plaintext data elements 200b falls within one of a plurality of subranges of a value range and each subrange of the plurality of subranges is identified by a subrange identifier 200a.

Step 803: receiving, for each subrange of the plurality of subranges, an encrypted subrange data bucket 220b encrypted with the second encryption key 115a and a message authentication code, MAC, 220a of the respective subrange identifier 200a based on a MAC key 115b (or a message digest, such as a hash value, of the respective subrange identifier).

Step 805: storing the plurality of encrypted subrange data buckets 220b and the plurality of MACs 220a (or message digests) of the subrange identifiers 200a in the database 125 of the data storage server 120, wherein each encrypted subrange data bucket 220b comprises the plaintext data elements 200b falling within the respective subrange and the corresponding cyphertext data elements 210a.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A client device (110), comprising a processor (111) configured to:
obtain data (125a) comprising a plurality of plaintext data elements (200b), wherein each of the plurality of plaintext data elements (200b) falls within one of a plurality of subranges of a range and each subrange of the plurality of subranges is identified by a subrange identifier (200a);
encrypt the plurality of plaintext data elements (200b) with a first encryption key (115a) to obtain a plurality of cyphertext data elements (210a);
send the data (125a), including the plurality of cyphertext data elements (210a), to a data storage server (120) for storing the data (125a) in a database (125) of the data storage server (120);
encrypt, for each subrange of the plurality of subranges, a subrange data bucket (220b) with a second encryption key (115a), wherein each subrange data bucket (220b) comprises the plaintext data elements (200b) falling within the respective subrange and the corresponding cyphertext data elements (210a); and
send, for each subrange of the plurality of subranges, the respective encrypted subrange data bucket (220b) and a message digest of the respective subrange identifier (200a) or the respective encrypted subrange data bucket (220b) and a message authentication code, MAC, (220a) of the respective subrange identifier (200a) based on a MAC key (115b) to the data storage server (120) for storing the plurality of encrypted subrange data buckets (220b) and the plurality of message digests or MAC (220a) of the subrange identifiers (200a) in the database (125) of the data storage server (120).

2. The client device (110) of claim 1, wherein the processor (111) is further configured to obtain an encrypted version of at least one of the first encryption key (115a), the second encryption key (115a), and the MAC key (115b) from a remote key management server (130), wherein the at least one of the encrypted first encryption key (115a), the encrypted second encryption key (115a), and the encrypted MAC key (115b) is encrypted with a client device master key.

3. The client device (110) of claim 1 or 2, wherein the processor (111) is further configured to send an identifier of the first encryption key (115a) with the data (125a), including the plurality of cyphertext data elements (210a), to the data storage server (120) for storing the data (125a) on the basis of the identifier of the first encryption key (115a) in the database (125) of the data storage server (120).

4. The client device (110) of claim 3, wherein the processor (111) is further configured to send at least one of the encrypted first encryption key (115a), the encrypted second encryption key (115a), and the encrypted MAC key (115b) to the data storage server (120).

5. The client device (110) of any one of the preceding claims, wherein, for processing a query of the data (125a), including the plurality of cyphertext data elements (210a), stored in the database (125) of the data storage server (120), the processor (111) is configured to:
determine the subrange identifiers of the subranges covered by a query range defined by the query for obtaining a subset of the plurality of subrange identifiers (200a);
obtain, on the basis of the message digests or MAC of the one or more subrange identifiers of the subset of the plurality of subrange identifiers (200a), one or more of the plurality of encrypted data buckets (220b) from the database (125) of the data storage server (120);
decrypt the one or more encrypted data buckets (220b) with the second encryption key (115b) to obtain, for each encrypted data bucket (220b), one or more of the plurality of pairs of plaintext data elements and cyphertext data elements; and
obtain, on the basis of the one or more cyphertext data elements, the data (125a) stored in the database (125) of the data storage server (120).

6. The client device (110) of claim 5, wherein the processor (111) is further configured to check, on the basis of the plaintext data elements (200b), whether the respective data element falls within the query range.

7. A method (700) for operating a client device (110), the method (700) comprising:
obtaining (701) data (125a) comprising a plurality of plaintext data elements (200b), wherein each of the plurality of plaintext data elements (200b) falls within one of a plurality of subranges of a range and each subrange of the plurality of subranges is identified by a subrange identifier (200a);
encrypting (703) the plurality of plaintext data elements (200b) with a first encryption key (115a) to obtain a plurality of cyphertext data elements (210a);
sending (705) the data (125a), including the plurality of cyphertext data elements (210a), to a data storage server (120) for storing the data (125a) in a database (125) of the data storage server (120);
encrypting (707), for each subrange of the plurality of subranges, a subrange data bucket (220b) with a second encryption key (115a), wherein each subrange data bucket (220b) comprises the plaintext data elements falling within the respective subrange and the corresponding cyphertext data elements; and
sending (709), for each subrange of the plurality of subranges, the respective encrypted subrange data bucket (220b) and a message digest of the respective subrange identifier or the respective encrypted subrange data bucket (220b) and a message authentication code, MAC, (220a) of the respective subrange identifier based on a MAC key (115b) to the data storage server (120) for storing the plurality of encrypted subrange data buckets (220b) and the plurality of message digests or MAC (220a) of the subrange identifiers in the database (125) of the data storage server (120).

8. A data storage server (120), comprising a processor (121) configured to:
receive data (125a) from a client device (110), the data (125a) comprising a plurality of cyphertext data elements (210a) encrypted with a first encryption key (115a) based on a plurality of plaintext data elements (200b), wherein each of the plurality of plaintext data elements (200b) falls within one of a plurality of subranges of a range and each subrange of the plurality of subranges is identified by a subrange identifier (200a);
receive, for each subrange of the plurality of subranges, an encrypted subrange data bucket (220b) encrypted with a second encryption key (115a) and a message digest of the respective subrange identifier (200a) or the encrypted subrange data bucket (220b) encrypted with the second encryption key (115a) and a message authentication code, MAC, (220a) of the respective subrange identifier (200a) based on a MAC key (115b); and
store the plurality of encrypted subrange data buckets (220b) and the plurality of message digests or MAC (220a) of the subrange identifiers (200a) in a database (125) of the data storage server (120), wherein each encrypted subrange data bucket (220b) comprises the plaintext data elements (200b) falling within the respective subrange and the corresponding cyphertext data elements (210a).

9. The data storage server (120) of claim 8, wherein the processor (121) is further configured to store the data (125), including the plurality of cyphertext data elements (210a), in a first table (210) of the database (125) and store the plurality of encrypted subrange data buckets (220b) and the plurality of message digests or MAC (220a) of the subrange identifiers (200a) in a second table (220) of the database (125).

10. The data storage server (120) of claim 9, wherein the processor (121) is further configured to store the plurality of cyphertext data elements (210a) in a column of the first table (210) of the database (125).

11. The data storage server (120) of any one of claims 8 to 10, wherein the processor (121) is further configured to receive an identifier of the first encryption key (115a) with the data (125a), including the plurality of cyphertext data elements (210a), from the client device (110) and to store the data (125a) on the basis of the identifier of the first encryption key (115a) in the database (125).

12. The data storage server (120) of any one of claims 8 to 11, wherein the processor (121) is further configured to receive at least one of the encrypted first encryption key (115a), the encrypted second encryption key (115a), and the encrypted MAC key (115b) from the client device (110).

13. A method (800) for operating a data storage server (120), the method (800) comprising:
receiving (801) data (125a) from a client device (110), the data (125a) comprising a plurality of cyphertext data elements (210a) encrypted with a first encryption key (115a) based on a plurality of plaintext data elements (200b), wherein each of the plurality of plaintext data elements (200b) falls within one of a plurality of subranges of a range and each subrange of the plurality of subranges is identified by a subrange identifier (200a);
receiving (803), for each subrange of the plurality of subranges, an encrypted subrange data bucket (220b) encrypted with a second encryption key (115a) and a message digest of the respective subrange identifier (200a) or the encrypted subrange data bucket (220b) encrypted with the second encryption key (115a) and a message authentication code, MAC, (220a) of the respective subrange identifier (200a) based on a MAC key (115b); and
storing (805) the plurality of encrypted subrange data buckets (220b) and the plurality of message digests or MAC (220a) of the subrange identifiers (200a) in a database (125) of the data storage server (120), wherein each encrypted subrange data bucket (220b) comprises the plaintext data elements (200b) falling within the respective subrange and the corresponding cyphertext data elements (210a).

14. A computer program product comprising a computer-readable storage medium for storing program code which causes a computer or a processor to perform the method (700) of claim 7 when the program code is executed by the computer or the processor.

15. A computer program product comprising a computer-readable storage medium for storing program code which causes a computer or a processor to perform the method (800) of claim 13, when the program code is executed by the computer or the processor.

## Patentansprüche

1. Client-Vorrichtung (110), die einen Prozessor (111) umfasst, der zu Folgendem konfiguriert ist:
Erlangen von Daten (125a), die eine Vielzahl von Klartext-Datenelementen (200b) umfassen, wobei jedes der Vielzahl von Klartext-Datenelementen (200b) in einen einer Vielzahl von Teilbereichen eines Bereichs fällt und jeder Teilbereich der Vielzahl von Teilbereichen durch eine Teilbereichskennung (200a) identifiziert wird;
Verschlüsseln der Vielzahl von Klartext-Datenelementen (200b) mit einem ersten Verschlüsselungsschlüssel (115a), um eine Vielzahl von Chiffretext-Datenelementen (210a) zu erlangen;
Senden der Daten (125a), welche die Vielzahl von Chiffretext-Datenelementen (210a) beinhalten, an einen Datenspeicherserver (120) zum Speichern der Daten (125a) in einer Datenbank (125) des Datenspeicherservers (120);
für jeden Teilbereich der Vielzahl von Teilbereichen, Verschlüsseln eines Teilbereich-Datentopfes (220b) mit einem zweiten Verschlüsselungsschlüssel (115a), wobei jeder Teilbereich-Datentopf (220b) die Klartext-Datenelemente (200b), die in den jeweiligen Teilbereich fallen, und die entsprechenden Chiffretext-Datenelemente (210a) umfasst; und
für jeden Teilbereich der Vielzahl von Teilbereichen, Senden des jeweiligen verschlüsselten Teilbereich-Datentopfes (220b) und eines Nachrichten-Digests der jeweiligen Teilbereichskennung (200a) oder des jeweiligen verschlüsselten Teilbereich-Datentopfes (220b) und eines Nachrichtenauthentifizierungscodes (message authentication code - MAC) (220a) der jeweiligen Teilbereichskennung (200a), der auf einem MAC-Schlüssel (115b) basiert, an den Datenspeicherserver (120) zum Speichern der Vielzahl verschlüsselter Teilbereich-Datentöpfe (220b) und der Vielzahl von Nachrichten-Digests oder MAC (220a) der Teilbereichskennungen (200a) in der Datenbank (125) des Datenspeicherservers (120).

2. Client-Vorrichtung (110) nach Anspruch 1, wobei der Prozessor (111) ferner dazu konfiguriert ist, eine verschlüsselte Version von mindestens einem von dem ersten Verschlüsselungsschlüssel (115a), dem zweiten Verschlüsselungsschlüssel (115a) und dem MAC-Schlüssel (115b) von einem entfernten Schlüsselverwaltungsserver (130) zu erlangen, wobei der mindestens eine von dem verschlüsselten ersten Verschlüsselungsschlüssel (115a), dem verschlüsselten zweiten Verschlüsselungsschlüssel (115a) und dem verschlüsselten MAC-Schlüssel (115b) mit einem Masterschlüssel der Client-Vorrichtung verschlüsselt ist.

3. Client-Vorrichtung (110) nach Anspruch 1 oder 2, wobei der Prozessor (111) ferner dazu konfiguriert ist, eine Kennung des ersten Verschlüsselungsschlüssels (115a) mit den Daten (125a), welche die Vielzahl von Chiffretext-Datenelementen (210a) beinhalten, an den Datenspeicherserver (120) zum Speichern der Daten (125a) auf Grundlage der Kennung des ersten Verschlüsselungsschlüssels (115a) in der Datenbank (125) des Datenspeicherservers (120) zu senden.

4. Client-Vorrichtung (110) nach Anspruch 3, wobei der Prozessor (111) ferner dazu konfiguriert ist, mindestens einen von dem verschlüsselten ersten Verschlüsselungsschlüssel (115a), dem verschlüsselten zweiten Verschlüsselungsschlüssel (115a) und dem verschlüsselten MAC-Schlüssel (115b) an den Datenspeicherserver (120) zu senden.

5. Client-Vorrichtung (110) nach einem der vorhergehenden Ansprüche, wobei zur Verarbeitung einer Abfrage die Daten (125a), welche die Vielzahl von Chiffretext-Datenelementen (210a) beinhalten und in der Datenbank (125) des Datenspeicherservers (120) gespeichert sind, der Prozessor (111) zu Folgendem konfiguriert ist:
Bestimmen der Teilbereichskennungen der Teilbereiche, die durch einen Abfragebereich abgedeckt sind, der durch die Abfrage zum Erlangen einer Teilmenge der Vielzahl von Teilbereichskennungen (200a) definiert ist;
Erlangen eines oder mehrerer der Vielzahl verschlüsselter Datentöpfe (220b) aus der Datenbank (125) des Datenspeicherservers (120) auf Grundlage der Nachrichten-Digests oder der MAC der einen oder der mehreren Teilbereichskennungen der Teilmenge der Vielzahl von Teilbereichskennungen (200a);
Entschlüsseln des einen oder der mehreren verschlüsselten Datentöpfe (220b) mit dem zweiten Verschlüsselungsschlüssel (115b), um für jeden verschlüsselten Datentopf (220b) eines oder mehrere der Vielzahl von Paaren von Klartext-Datenelementen und Chiffretext-Datenelementen zu erlangen; und
Erlangen der Daten (125a), die in der Datenbank (125) des Datenspeicherservers (120) gespeichert sind, auf Grundlage des einen oder der mehreren Chiffretext-Datenelemente.

6. Client-Vorrichtung (110) nach Anspruch 5, wobei der Prozessor (111) ferner dazu konfiguriert ist, auf Grundlage der Klartext-Datenelemente (200b) zu prüfen, ob das jeweilige Datenelement in den Abfragebereich fällt.

7. Verfahren (700) zum Betreiben einer Client-Vorrichtung (110), wobei das Verfahren (700) Folgendes umfasst:
Erlangen (701) von Daten (125a), die eine Vielzahl von Klartext-Datenelementen (200b) umfassen, wobei jedes der Vielzahl von Klartext-Datenelementen (200b) in einen einer Vielzahl von Teilbereichen eines Bereichs fällt und jeder Teilbereich der Vielzahl von Teilbereichen durch eine Teilbereichskennung (200a) identifiziert wird;
Verschlüsseln (703) der Vielzahl von Klartext-Datenelementen (200b) mit einem ersten Verschlüsselungsschlüssel (115a), um eine Vielzahl von Chiffretext-Datenelementen (210a) zu erlangen; Senden (705) der Daten (125a), welche die Vielzahl von Chiffretext-Datenelementen (210a) beinhalten, an einen Datenspeicherserver (120) zum Speichern der Daten (125a) in einer Datenbank (125) des Datenspeicherservers (120);
für jeden Teilbereich der Vielzahl von Teilbereichen, Verschlüsseln (707) eines Teilbereich-Datentopfes (220b) mit einem zweiten Verschlüsselungsschlüssel (115a), wobei jeder Teilbereich-Datentopf (220b) die Klartext-Datenelemente, die in den jeweiligen Teilbereich fallen, und die entsprechenden Chiffretext-Datenelemente umfasst; und
für jeden Teilbereich der Vielzahl von Teilbereichen, Senden (709) des jeweiligen verschlüsselten Teilbereich-Datentopfes (220b) und eines Nachrichten-Digests der jeweiligen Teilbereichskennung oder des jeweiligen verschlüsselten Teilbereich-Datentopfes (220b) und eines Nachrichtenauthentifizierungscodes (MAC) (220a) der jeweiligen Teilbereichskennung, der auf einem MAC-Schlüssel (115b) basiert, an den Datenspeicherserver (120) zum Speichern der Vielzahl verschlüsselter Teilbereich-Datentöpfe (220b) und der Vielzahl von Nachrichten-Digests oder MAC (220a) der Teilbereichskennungen in der Datenbank (125) des Datenspeicherservers (120).

8. Datenspeicherserver (120), der einen Prozessor (121) umfasst, der zu Folgendem konfiguriert ist:
Empfangen von Daten (125a) von einer Client-Vorrichtung (110), wobei die Daten (125a) eine Vielzahl von Chiffretext-Datenelementen (210a) umfassen, die mit einem ersten Verschlüsselungsschlüssel (115a) verschlüsselt sind und auf einer Vielzahl von Klartext-Datenelementen (200b) basieren, wobei jedes der Vielzahl von Klartext-Datenelementen (200b) in einen einer Vielzahl von Teilbereichen eines Bereichs fällt und jeder Teilbereich der Vielzahl von Teilbereichen durch eine Teilbereichskennung (200a) identifiziert wird;
für jeden Teilbereich der Vielzahl von Teilbereichen, Empfangen eines verschlüsselten Teilbereich-Datentopfes (220b), der mit einem zweiten Verschlüsselungsschlüssel (115a) verschlüsselt ist, und eines Nachrichten-Digests der jeweiligen Teilbereichskennung (200a) oder des verschlüsselten Teilbereich-Datentopfes (220b), der mit dem zweiten Verschlüsselungsschlüssel (115a) verschlüsselt ist, und eines Nachrichtenauthentifizierungscodes (MAC) (220a) der jeweiligen Teilbereichskennung (200a), der auf einem MAC-Schlüssel (115b) basiert; und
Speichern der Vielzahl verschlüsselter Teilbereich-Datentöpfe (220b) und der Vielzahl von Nachrichten-Digests oder MAC (220a) der Teilbereichskennungen (200a) in einer Datenbank (125) des Datenspeicherservers (120), wobei jeder verschlüsselte Teilbereich-Datentopf (220b) die Klartext-Datenelemente (200b), die in den jeweiligen Teilbereich fallen, und die entsprechenden Chiffretext-Datenelemente (210a) umfasst.

9. Der Datenspeicherserver (120) nach Anspruch 8, wobei der Prozessor (121) ferner dazu konfiguriert ist, die Daten (125), welche die Vielzahl von Chiffretext-Datenelementen (210a) beinhalten, in einer ersten Tabelle (210) der Datenbank (125) zu speichern und die Vielzahl verschlüsselter Teilbereich-Datentöpfe (220b) und die Vielzahl von Nachrichten-Digests oder MAC (220a) der Teilbereichskennungen (200a) in einer zweiten Tabelle (220) der Datenbank (125) zu speichern.

10. Datenspeicherserver (120) nach Anspruch 9, wobei der Prozessor (121) ferner dazu konfiguriert ist, die Vielzahl von Chiffretext-Datenelementen (210a) in einer Spalte der ersten Tabelle (210) der Datenbank (125) zu speichern.

11. Datenspeicherserver (120) nach einem der Ansprüche 8 bis 10, wobei der Prozessor (121) ferner dazu konfiguriert ist, eine Kennung des ersten Verschlüsselungsschlüssels (115a) mit den Daten (125a), welche die Vielzahl von Chiffretext-Datenelementen (210a) beinhalten, von der Client-Vorrichtung (110) zu empfangen und die Daten (125a) auf Grundlage der Kennung des ersten Verschlüsselungsschlüssels (115a) in der Datenbank (125) zu speichern.

12. Datenspeicherserver (120) nach einem der Ansprüche 8 bis 11, wobei der Prozessor (121) ferner dazu konfiguriert ist, mindestens einen von dem verschlüsselten ersten Verschlüsselungsschlüssel (115a), dem verschlüsselten zweiten Verschlüsselungsschlüssel (115a) und dem verschlüsselten MAC-Schlüssel (115b) von der Client-Vorrichtung (110) zu empfangen.

13. Verfahren (800) zum Betreiben eines Datenspeicherservers (120), wobei das Verfahren (800) Folgendes umfasst:
Empfangen (801) von Daten (125a) von einer Client-Vorrichtung (110), wobei die Daten (125a) eine Vielzahl von Chiffretext-Datenelementen (210a) umfassen, die mit einem ersten Verschlüsselungsschlüssel (115a) verschlüsselt sind und auf einer Vielzahl von Klartext-Datenelementen (200b) basieren, wobei jedes der Vielzahl von Klartext-Datenelementen (200b) in einen einer Vielzahl von Teilbereichen eines Bereichs fällt und jeder Teilbereich der Vielzahl von Teilbereichen durch eine Teilbereichskennung (200a) identifiziert wird;
für jeden Teilbereich der Vielzahl von Teilbereichen, Empfangen (803) eines verschlüsselten Teilbereich-Datentopfes (220b), der mit einem zweiten Verschlüsselungsschlüssel (115a) verschlüsselt ist, und eines Nachrichten-Digests der jeweiligen Teilbereichskennung (200a) oder des verschlüsselten Teilbereich-Datentopfes (220b), der mit dem zweiten Verschlüsselungsschlüssel (115a) verschlüsselt ist, und eines Nachrichtenauthentifizierungscodes (MAC) (220a) der jeweiligen Teilbereichskennung (200a), der auf einem MAC-Schlüssel (115b) basiert; und
Speichern (805) der Vielzahl verschlüsselter Teilbereich-Datentöpfe (220b) und der Vielzahl von Nachrichten-Digests oder MAC (220a) der Teilbereichskennungen (200a) in einer Datenbank (125) des Datenspeicherservers (120), wobei jeder verschlüsselte Teilbereich-Datentopf (220b) die Klartext-Datenelemente (200b), die in den jeweiligen Teilbereich fallen, und die entsprechenden Chiffretext-Datenelemente (210a) umfasst.

14. Computerprogrammprodukt, das ein computerlesbares Speichermedium zum Speichern von Programmcode umfasst, der einen Computer oder einen Prozessor dazu veranlasst, das Verfahren (700) nach Anspruch 7 durchzuführen, wenn der Programmcode durch den Computer oder den Prozessor ausgeführt wird.

15. Computerprogrammprodukt, das ein computerlesbares Speichermedium zum Speichern von Programmcode umfasst, der einen Computer oder einen Prozessor dazu veranlasst, das Verfahren (800) nach Anspruch 13 durchzuführen, wenn der Programmcode durch den Computer oder den Prozessor ausgeführt wird.

## Revendications

1. Dispositif client (110), comprenant un processeur (111) configuré pour :
obtenir des données (125a) comprenant une pluralité d'éléments de données de texte en clair (200b), dans lequel chacun de la pluralité d'éléments de données de texte en clair (200b) tombe dans l'une d'une pluralité de sous-gammes d'une gamme et chaque sous-gamme de la pluralité de sous-gammes est identifiée par un identifiant de sous-gamme (200a) ;
chiffrer la pluralité d'éléments de données de texte en clair (200b) avec une première clé de chiffrement (115a) pour obtenir une pluralité d'éléments de données de texte chiffré (210a) ;
envoyer les données (125a), y compris la pluralité d'éléments de données de texte chiffré (210a), à un serveur de stockage de données (120) pour stocker les données (125a) dans une base de données (125) du serveur de stockage de données (120) ;
chiffrer, pour chaque sous-gamme de la pluralité de sous-gammes, un volume de données de sous-gamme (220b) avec une seconde clé de chiffrement (115a), dans lequel chaque volume de données de sous-gamme (220b) comprend les éléments de données de texte en clair (200b) tombant dans la sous-gamme respective et les éléments de données de texte chiffré correspondants (210a) ; et
envoyer, pour chaque sous-gamme de la pluralité de sous-gammes, le volume de données de sous-gamme chiffré respectif (220b) et un condensé de message de l'identifiant de sous-gamme respectif (200a) ou le volume de données de sous-gamme chiffré respectif (220b) et un code d'authentification de message, MAC, (220a) de l'identifiant de sous-gamme respectif (200a) sur la base d'une clé MAC (115b) au serveur de stockage de données (120) pour stocker la pluralité de volumes de données de sous-gamme chiffrés (220b) et la pluralité de condensés de message ou MAC (220a) des identifiants de sous-gamme (200a) dans la base de données (125) du serveur de stockage de données (120).

2. Dispositif client (110) selon la revendication 1, dans lequel le processeur (111) est en outre configuré pour obtenir une version chiffrée d'au moins l'une parmi la première clé de chiffrement (115a), la seconde clé de chiffrement (115a) et la clé MAC (115b) à partir d'un serveur de gestion de clés à distance (130), dans lequel l'au moins une parmi la première clé de chiffrement chiffrée (115a), la seconde clé de chiffrement chiffrée (115a) et la clé MAC chiffrée (115b) est chiffrée avec une clé principale du dispositif client.

3. Dispositif client (110) selon la revendication 1 ou 2, dans lequel le processeur (111) est en outre configuré pour envoyer un identifiant de la première clé de chiffrement (115a) avec les données (125a), y compris la pluralité d'éléments de données de texte chiffré (210a), au serveur de stockage de données (120) pour stocker les données (125a) sur la base de l'identifiant de la première clé de chiffrement (115a) dans la base de données (125) du serveur de stockage de données (120).

4. Dispositif client (110) selon la revendication 3, dans lequel le processeur (111) est en outre configuré pour envoyer au moins l'une parmi la première clé de chiffrement chiffrée (115a), la seconde clé de chiffrement chiffrée (115a) et la clé MAC chiffrée (115b) au serveur de stockage de données (120) .

5. Dispositif client (110) selon l'une quelconque des revendications précédentes, dans lequel, pour traiter une requête des données (125a), y compris la pluralité d'éléments de données de texte chiffré (210a), stockées dans la base de données (125) du serveur de stockage données (120), le processeur (111) est configuré pour :
déterminer les identifiants de sous-gammes des sous-gammes couvertes par une gamme de requête définie par la requête pour obtenir un sous-ensemble de la pluralité d'identifiants de sous-gammes (200a) ;
obtenir, sur la base des résumés de message ou MAC des un ou plusieurs identifiants de sous-gammes du sous-ensemble de la pluralité d'identifiants de sous-gammes (200a), un ou plusieurs de la pluralité de volumes de données chiffrés (220b) à partir de la base de données (125) du serveur de stockage de données (120) ;
déchiffrer les un ou plusieurs volumes de données chiffrés (220b) avec la seconde clé de chiffrement (115b) pour obtenir, pour chaque volume de données chiffré (220b), une ou plusieurs de la pluralité de paires d'éléments de données de texte en clair et d'éléments de données de texte chiffré ; et
obtenir, sur la base des un ou plusieurs éléments de données de texte chiffré, les données (125a) stockées dans la base de données (125) du serveur de stockage de données (120).

6. Dispositif client (110) selon la revendication 5, dans lequel le processeur (111) est en outre configuré pour vérifier, sur la base des éléments de données de texte en clair (200b), si l'élément de données respectif tombe dans la gamme de requête.

7. Procédé (700) pour faire fonctionner un dispositif client (110), le procédé (700) comprenant :
l'obtention (701) de données (125a) comprenant une pluralité d'éléments de données de texte en clair (200b), dans lequel chacun de la pluralité d'éléments de données de texte en clair (200b) tombe dans l'une d'une pluralité de sous-gammes d'une gamme et chaque sous-gamme de la pluralité de sous-gammes est identifiée par un identifiant de sous-gamme (200a) ;
le chiffrement (703) de la pluralité d'éléments de données de texte en clair (200b) avec une première clé de chiffrement (115a) pour obtenir une pluralité d'éléments de données de texte chiffré (210a) ;
l'envoi (705) des données (125a), y compris la pluralité d'éléments de données de texte chiffré (210a), à un serveur de stockage de données (120) pour stocker les données (125a) dans une base de données (125) du serveur de stockage de données (120) ;
le chiffrement (707), pour chaque sous-gamme de la pluralité de sous-gammes, d'un volume de données de sous-gamme (220b) avec une seconde clé de chiffrement (115a), dans lequel chaque volume de données de sous-gamme (220b) comprend les éléments de données de texte en clair tombant dans la sous-gamme respective et les éléments de données de texte chiffré correspondants ; et
l'envoi (709), pour chaque sous-gamme de la pluralité de sous-gammes, du volume de données de sous-gamme chiffré respectif (220b) et d'un condensé de message de l'identifiant de sous-gamme respectif ou du volume de données de sous-gamme chiffré respectif (220b) et d'un code d'authentification de message, MAC, (220a) de l'identifiant de sous-gamme respectif sur la base d'une clé MAC (115b) au serveur de stockage de données (120) pour stocker la pluralité de volumes de données de sous-gamme chiffrés (220b) et la pluralité de condensés de message ou MAC (220a) des identifiants de sous-gamme dans la base de données (125) du serveur de stockage de données (120).

8. Serveur de stockage de données (120), comprenant un processeur (121) configuré pour :
recevoir des données (125a) d'un dispositif client (110), les données (125a) comprenant une pluralité d'éléments de données de texte chiffré (210a) chiffrés avec une première clé de chiffrement (115a) sur la base d'une pluralité d'éléments de données de texte en clair (200b), dans lequel chacun de la pluralité d'éléments de données de texte en clair (200b) tombe dans l'une d'une pluralité de sous-gammes d'une gamme et chaque sous-gamme de la pluralité de sous-gammes est identifiée par un identificateur de sous-gamme (200a) ;
recevoir, pour chaque sous-gamme de la pluralité de sous-gammes, un volume de données de sous-gamme chiffré (220b) chiffré avec une seconde clé de chiffrement (115a) et un condensé de message de l'identifiant de sous-gamme respectif (200a) ou le volume de données de sous-gamme chiffré (220b) chiffré avec la seconde clé de chiffrement (115a) et un code d'authentification de message, MAC, (220a) de l'identifiant de sous-gamme respectif (200a) sur la base d'une clé MAC (115b) ; et
stocker la pluralité de volumes de données de sous-gamme chiffrés (220b) et la pluralité de condensés de message ou MAC (220a) des identifiants de sous-gamme (200a) dans une base de données (125) du serveur de stockage de données (120), dans lequel chaque volume de données de sous-gamme chiffré (220b) comprend les éléments de données de texte en clair (200b) tombant dans la sous-gamme respective et les éléments de données de texte chiffré correspondants (210a).

9. Serveur de stockage de données (120) selon la revendication 8, dans lequel le processeur (121) est en outre configuré pour stocker les données (125), y compris la pluralité d'éléments de données de texte chiffré (210a), dans une première table (210) de la base de données (125) et stocker la pluralité de volumes de données de sous-gamme chiffrés (220b) et la pluralité de condensés de message ou MAC (220a) des identifiants de sous-gamme (200a) dans une seconde table (220) de la base de données (125).

10. Serveur de stockage de données (120) selon la revendication 9, dans lequel le processeur (121) est en outre configuré pour stocker la pluralité d'éléments de données de texte chiffré (210a) dans une colonne de la première table (210) de la base de données (125).

11. Serveur de stockage de données (120) selon l'une quelconque des revendications 8 à 10, dans lequel le processeur (121) est en outre configuré pour recevoir un identifiant de la première clé de chiffrement (115a) avec les données (125a), y compris la pluralité d'éléments de données de texte chiffré (210a), du dispositif client (110) et pour stocker les données (125a) sur la base de l'identifiant de la première clé de chiffrement (115a) dans la base de données (125) .

12. Serveur de stockage de données (120) selon l'une quelconque des revendications 8 à 11, dans lequel le processeur (121) est en outre configuré pour recevoir au moins l'une parmi la première clé de chiffrement chiffrée (115a), la seconde clé de chiffrement chiffrée (115a), et la clé MAC chiffrée (115b) du dispositif client (110).

13. Procédé (800) pour faire fonctionner un serveur de stockage de données (120), le procédé (800) comprenant :
la réception (801) de données (125a) d'un dispositif client (110), les données (125a) comprenant une pluralité d'éléments de données de texte chiffré (210a) chiffrés avec une première clé de chiffrement (115a) sur la base d'une pluralité d'éléments de données de texte clair (200b), dans lequel chacun de la pluralité d'éléments de données de texte en clair (200b) tombe dans l'une d'une pluralité de sous-gammes d'une gamme et chaque sous-gamme de la pluralité de sous-gammes est identifiée par un identifiant de sous-gamme (200a) ;
la réception (803), pour chaque sous-gamme de la pluralité de sous-gammes, d'un volume de données de sous-gamme chiffré (220b) chiffré avec une seconde clé de chiffrement (115a) et un condensé de message de l'identifiant de sous-gamme respectif (200a) ou du volume de données de sous-gamme chiffré (220b) chiffré avec la seconde clé de chiffrement (115a) et d'un code d'authentification de message, MAC, (220a) de l'identifiant de sous-gamme respectif (200a) sur la base d'une clé MAC (115b) ; et
le stockage (805) de la pluralité de volumes de données de sous-gamme chiffrés (220b) et de la pluralité de condensés de message ou MAC (220a) des identifiants de sous-gamme (200a) dans une base de données (125) du serveur de stockage de données (120), dans lequel chaque volume de données de sous-gamme chiffré (220b) comprend les éléments de données de texte en clair (200b) tombant dans la sous-gamme respective et les éléments de données de texte chiffré correspondants (210a).

14. Produit de programme informatique comprenant un support de stockage lisible par ordinateur pour stocker un code de programme qui amène un ordinateur ou un processeur à mettre en œuvre le procédé (700) selon la revendication 7 lorsque le code de programme est exécuté par l'ordinateur ou le processeur.

15. Produit de programme informatique comprenant un support de stockage lisible par ordinateur pour stocker un code de programme qui amène un ordinateur ou un processeur à mettre en œuvre le procédé (800) selon la revendication 13, lorsque le code de programme est exécuté par l'ordinateur ou le processeur.
